# EUROPÄISCHE PATENTSCHRIFT

(11) **EP 2 936 662 B1**
(45) Veröffentlichungstag und Bekanntmachung des Hinweises auf die Patenterteilung: **07.12.2016**
(21) Anmeldenummer: 13811209.9
(22) Anmeldetag: 18.12.2013
(51) Int. Cl.: H02K 21/04

(54) **ELEKTRISCHE MASCHINE**
ELECTRIC MACHINE
MACHINE ÉLECTRIQUE

(30) Priorität: 19.12.2012 DE 102012223711
(43) Veröffentlichungstag der Anmeldung: 28.10.2015
(73) Patentinhaber: Robert Bosch GmbH, 70442 Stuttgart (DE)
(72) Erfinder: WOLF, Gert, 71563 Affalterbach (DE); WEBER, Gerlinde, 71701 Schwieberdingen (DE); SHENDI, Alexander, 71679 Asperg (DE)
(86) Internationale Anmeldenummer: PCT/EP2013/077230
(87) Internationale Veröffentlichungsnummer: WO 2014/096095

(56) Entgegenhaltungen:
- EP-A1- 0 762 617
- EP-A2- 0 881 747
- EP-A2- 0 917 278
- EP-A2- 1 089 417
- DE-A1- 10 106 519
- FR-A1- 2 861 512
- US-A- 5 536 987

## Beschreibung

### Stand der Technik

Aus der EP 910155A1 ist eine elektrische Maschine bekannt, die als sogenannter Klauenpolgenerator ausgeführt ist. Diese elektrische Maschine weist einen Ständer und einen Läufer auf, wobei am Umfang des Läufers benachbart angeordnete, unterschiedlich polarisierte Erregerpole bzw. Klauenpole bei Drehbewegung eine Ständerspannung in einer Ständerwicklung des Ständers erzeugen. Die Erregerpole dieser Maschine sind als sogenannte Klauenpole ausgeführt.

Aus der nächstliegenden Schrift EP 0 762 617 A1 ist eine elektrische Maschine nach dem Oberbegriff des Anspruchs 1 bekannt.

Die Aufgabe der Erfindung ist es, eine deutliche Reduzierung der Kupfermasse einer elektrischen Maschine zu erreichen. Bei Beibehaltung des Wirkungsgrades und der Leistungsabgabe wird sowohl das Gewicht der Erregerwicklung als auch das Gewicht der Ständerwicklung verringert. Darüber hinaus kann die Leistungsdichte deutlich gesteigert werden.

### Ausführungsformen der Erfindung

Es zeigen:
- Fig. 1: einen Längsschnitt durch eine elektrische Maschine,
- Fig. 2: eine Seitenansicht auf ein Ständereisen,
- Fig. 3: eine schematische Sicht auf einen abgewickelten Außenumfang des Rotors,
- Fig. 4: Zwischenräume zwischen zwei Klauenpolrädern, in denen eine permanentmagnetische Einrichtung eingesetzt ist,
- Fig. 4A: einen Verlauf der Leerlaufspannung und eines Volllaststrom in Abhängigkeit eines variablen konstruktiven Verhältnisses der Maschine,
- Fig. 5: eine Seitenansicht auf einen Wickelkopf und dessen Überdeckung durch einen Lüfter,
- Fig. 6: eine Seitenansicht auf eine Nut eines Ständer,
- Fig. 7: ein Diagramm, bei dem der normierte Abgabestrom bei 1800 1/min in Abhängigkeit von Längenverhältnissen und Durchmesserverhältnissen des Magnetkreises betrachtet wird,
- Fig. 8: ein weiteres Diagramm, bei dem der normierte Abgabestrom bei 1800 1/min in Abhängigkeit von anderen Längenverhältnissen des Magnetkreises betrachtet wird,
- Fig. 9: ein Ständereisen in einer weiteren vergrößerten Stirnansicht,
- Fig.10: ein Diagramm, in dem ein Verhältnis eines Abgabestroms bei 1800/min auf ein Verhältnis von Ständereisengeometrien bezogen ist,
- Fig. 11: ein Diagramm in dem ein Verhältnis aus Strom und eingesetzter Kupfermasse über ein Verhältnis aus der axialen Länge des Ständereisens und der drehaxialen Länge des elektromagnetischen Pfads aufgetragen ist.

### Beschreibung

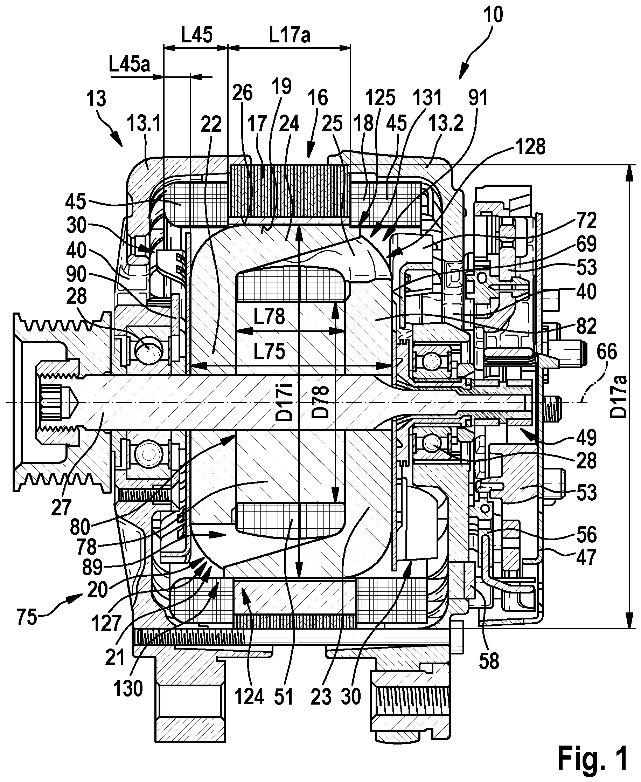

In Figur 1 ist ein Querschnitt durch eine elektrische Maschine 10, hier in der Ausführung als Generator bzw. Wechsel-, insbesondere Drehstromgenerator für Kraftfahrzeuge, dargestellt. Diese Maschine könnte mit einer entsprechenden Steuerung aber auch als Starter-Generator funktionieren. Diese elektrische Maschine 10 weist u. a. ein zweiteiliges Gehäuse 13 auf, das ein erstes Lagerschild 13.1 und ein zweites Lagerschild 13.2 umfasst. Das Lagerschild 13.1 und das Lagerschild 13.2 nehmen in sich einen sogenannten Stator 16 auf, der ein im Wesentlichen kreisringförmiges Ständereisen 17 umfasst, in dessen nach radial innen gerichteten, sich axial erstreckenden Nuten eine Ständerwicklung 18 eingefügt ist. Dieser ringförmige Stator 16 umgibt mit seiner radial nach innen gerichteten genuteten Oberfläche, die eine elektromagnetisch wirksame Oberfläche 19 ist, einen Rotor 20, der hier beispielsweise als Klauenpolläufer ausgebildet ist.

Der Rotor 20 umfasst u. a. zwei Polplatinen 22 und 23, an deren Außenumfang jeweils sich in axialer Richtung erstreckende Klauenpolfinger als elektromagnetisch polbare Klauenpole 24 und 25 angeordnet sind. Beide Polplatinen 22 und 23 sind im Rotor 20 derart angeordnet, dass deren sich in axiale Richtung erstreckende Klauenpole 24 bzw. 25 am Umfang des Rotors 20 einander abwechseln. Der Rotor 20 hat demnach ebenfalls eine elektromagnetisch wirksame Oberfläche 26. Es ergeben sich durch die sich am Umfang abwechselnden Klauenpole 24 bzw. 25 magnetisch erforderliche Zwischenräume 21, die hier auch als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch bspw. von einer axialen Stirnseite der elektrischen Maschine 10 durch den Innenraum der elektrischen Maschine 10 hindurch zu einer radial außen befindlichen Umgebung zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den für Kühlluft durchlässigen im Wesentlichen ringförmigen Wickelkopf 45 hindurchtreten kann. Durch diesen Effekt wird der Wickelkopf 45 gekühlt. Die Kühlluft nimmt nach dem Hindurchtreten durch den Wicklungsüberhang bzw. Wickelkopf 45 bzw. nach dem Umströmen dieses Wickelkopfs 45 durch hier in dieser Figur 1 nicht dargestellte Öffnungen einen Weg nach radial außen.

Die in Figur 1 dargestellte und sich auf der rechten Seite des Generators befindende Schutzkappe 47 schützt verschiedene Bauteile vor Umgebungseinflüssen. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Dieser Pluskühlkörper heißt Pluskühlkörper, weil dieser elektrisch leitfähig mit einem Pluspol eines Akkumulators (z. B. Starterstromversorgung) verbunden ist. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

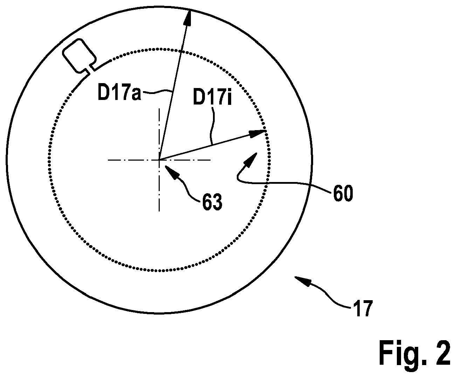

In Figur 1 ist demnach eine elektrische Maschine 10 mit einem Stator 16, der ein Ständereisen 17 aufweist, offenbart. Das Ständereisen 17 hat eine im Wesentlichen zylindrische Öffnung 60 mit einer zentralen Achse 63, siehe auch Figur 2. Die Öffnung 60 nimmt den Rotor 20 auf. Das Ständereisen 17 hat eine axiale Länge L17a und das Ständereisen 17 hält die Ständerwicklung 18. Zudem hat das Ständereisen 17 einen Innendurchmesser D17i und einen Außendurchmesser D17a. Auch der Rotor 20 besitzt eine Drehachse 66, die im montierten Zustand mit der zentralen Achse 63 zusammenfällt.

Der Rotor 20 hat eine axiale Stirnseite 69, an der ein Lüfter 30 mit Lüfterschaufeln 72 angeordnet ist. Der Lüfter ist drehfest mit dem Rotor 20 - vorzugsweise direkt - verbunden.

Der Rotor 20 weist einen elektromagnetisch erregbaren Pfad 75 auf, der einen Polkern 78 hat, an den sich an beide drehaxialen Enden 80, 82 je eine Polplatine 22, 23 anschließt: Von der einen Polplatine 22 gehen Klauenpole 24 aus, die eine Nordpolarität haben und von der anderen Polplatine 23 gehen Klauenpole 25 aus, die eine Südpolarität haben, wobei sich am Umfang des Rotors 20 die Klauenpole 24 und 25 nach Nordpolarität und Südpolarität abwechseln. Der radial innerhalb der Klauenpole 24, 25 angeordnete Polkern 78 hat eine drehaxiale Länge L78.

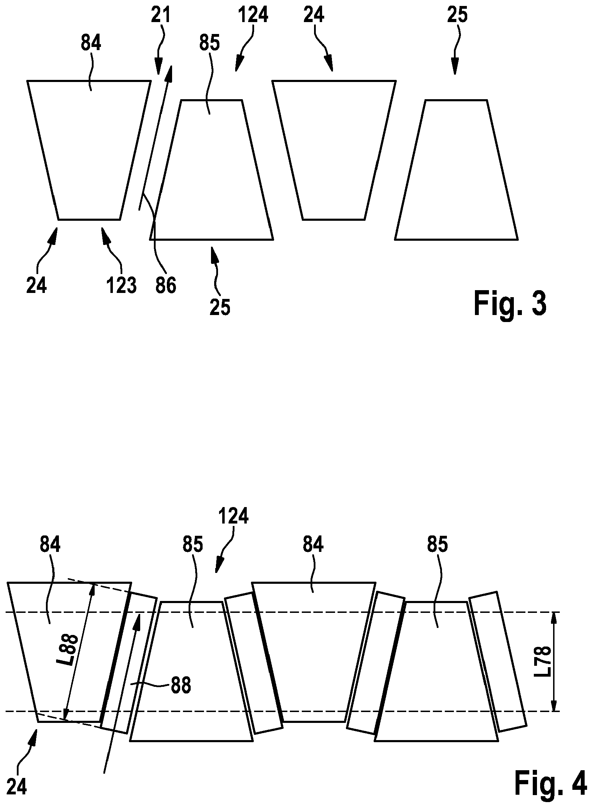

In Figur 3 ist eine schematische Sicht auf einen abgewickelten Außenumfang des Rotors 20 zu erkennen. Es sind die trapezförmigen Flächen 84 und 85 der Klauenpole 24 und 25 zu erkennen, die den elektromagnetischen Fluss über sich als Grenzfläche des Rotors 20 zu den Grenzflächen an Zähnen des Stators 16 leiten bzw. von dort aufnehmen. Der Rotor 20 hat einen bereits erwähnten, eine Längsrichtung 86 aufweisenden Zwischenraum 21 zwischen zwei benachbarten gegenpoligen Klauenpolen 24, 25. Die Längsrichtung 86 fällt mit einer Mittellinie zwischen den Klauenpolen 24 und 25 zusammen. Ist der Zwischenraum beispielsweise von parallel zueinander verlaufenden Seitenflächen der Klauenpole 24 und 25 begrenzt, so verläuft die Mittellinie in der Mitte zwischen den Seitenflächen der Klauenpole 24 und 25.

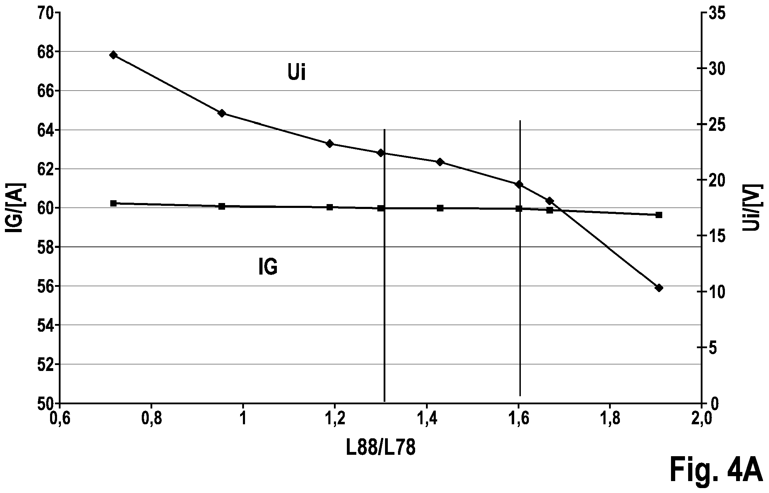

Wie Figur 4 zeigt, ist in dem einen Zwischenraum 21 zwischen den zwei Klauenpolen 24, 25 eine permanentmagnetische Einrichtung 88 eingesetzt. Die permanentmagnetische Einrichtung 88 hat eine Länge L88 in Längsrichtung 86 des Zwischenraums 21 (exklusive magnetisch nicht aktive Abschnitte wie Halteelemente). Die permanentmagnetische Einrichtung 88 dient der Kompensation eines elektromagnetischen bzw. magnetischen Streuflusses zwischen einem Klauenpol 24 mit Nordpolarität und einem Klauenpol 25 mit Südpolarität. Es ist vorgesehen, dass ein Verhältnis aus der Länge L88 der permanentmagnetischen Einrichtung 88 und der drehaxialen Länge L78 des Polkerns größer als 1,3 ist. Das heißt, dass Spitzen 123 und 124 der Klauenpole 24 und 25 in Zwischenräume 89 und 91 gleichpoliger Klauenpolwurzeln 130 und 131 jeweils hineinragen. Mit anderen Worten: es ragt eine Spitze 123 eines nordpoligen Klauenpols 124 zwischen zwei Klauenpolwurzeln 131 zweier südpoliger Klauenpole 125. Eine Klauenpolwurzel sei hier auf den Volumenbereich beschränkt, der sich in axialer Richtung an einen frei kragenden Teil eines Klauenpols 124, 125 anschließt. Ein entsprechendes Diagramm zeigt die Figur 4A, welches unter Berücksichtigung von Permanentmagneten simuliert wurde. Einerseits ist über dem Verhältnis von L88/L78 der Verlauf des erzeugten Stroms IG bei Volllast und einer Drehzahl des Rotors von 1800/min dargestellt, anderseits zeigt dieses Diagramm den Verlauf der induzierten Spannung Ui bei Leerlauf und einem Erregerstrom IE von Null Ampére in der Ständerwicklung 18 bei 18000/min. Das erwünschte minimale Verhältnis von L88/L78 von 1,3 ist durch den Wendepunkt des Verlaufs der induzierten Spannung Ui begründet. Das erwünschte bevorzugte Verhältnis von L88/L78 von größer 1,6 ist durch den beginnenden starken Abfall des Verlaufs der induzierten Spannung Ui begründet. Durch Auswahl des Verhältnisses L88/L78 > 1,6 wird sichergestellt, dass die durch die Permanentmagneten induzierte Spannung kleiner der Zenerspannung der Dioden ist. Diese liegt üblicherweise >=20V.

In einer Variante ist vorgesehen, dass ein Verhältnis aus der Länge L88 der permanentmagnetischen Einrichtung 88 und der drehaxialen Länge L78 des Polkerns 78 größer als 1,6 ist.

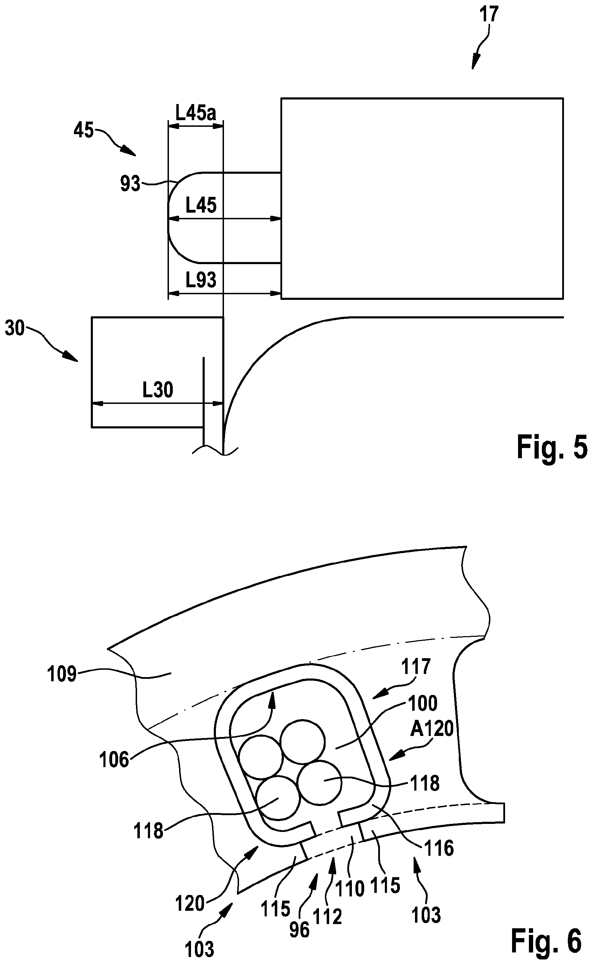

Des Weiteren ist definiert, dass die Ständerwicklung 18 einen Wickelkopf 45 hat, der eine Drahtverbindung 93 aufweist, die über eine drehaxiale Länge L93 vom Ständereisen 17 weg und wieder zu diesem hin geführt ist. Ist die betrachtete Drahtverbindung 93 die am weitesten auskragende Drahtverbindung 93, Figur 5, so ist dies gleichzeitig die drehaxiale Länge des Wickelkopfs L45. Der Lüfter 30 ist radial innerhalb des Wickelkopfs 45 angeordnet, Fig. 1 und Fig. 5. Der vom Wickelkopf 45 und dem Lüfter 30 gemeinsam in drehaxialer Richtung überdeckte Bereich über die Länge L45a und dabei ein Anteil der vom Lüfter 30 drehaxial überdeckten Länge L93 der Drahtverbindung 93 soll größer als 0,5, vorzugsweise größer als 0,7 sein. Das Verhältnis aus L45a zu L45 bzw. L45a zu L93 soll demnach größer als 0,5, vorzugsweise größer als 0,7 sein.

Die Ständerwicklung 18 ist in nach radial innen geöffnete Nuten 96 des Ständereisens eingesetzt, Figur 6. Es ist hier eine elektromagnetisch wirksame Fläche 100 der Nut 96 definiert. Die Fläche 100 ist durch die Zähne 103 und den Nutgrund 106 in Richtung zum Joch 109 begrenzt. Eine Fläche 110 im Nutschlitz 112 zwischen den beiden Zahnköpfen 115 bleibt unberücksichtigt, da bei dieser Bauweise dieser Raum nicht für die Anordnung einer Wicklung vorgesehen ist. Innerhalb der elektromagnetisch wirksamen Fläche 100 der Nut 96 und von einer Nutauskleidung 116 umgeben, befindet sich jeweils eine elektromagnetisch wirksame Wicklungsanordnung 117 der Ständerwicklung 18, die Spulenseiten 118 bspw. einer Phasen- oder Strangwicklung umfasst. Die Wicklungsanordnung 117 weist mindestens einen Drahtquerschnitt 120 mit einer elektrisch wirksamen Drahtquerschnittsfläche A120 auf, wobei ein Verhältnis aus der mindestens einen Drahtquerschnittsfläche A120 und damit aller Drahtquerschnitte (120) in einer Nut (96) und der elektromagnetisch wirksamen Fläche 100 kleiner als 0,5 ist.

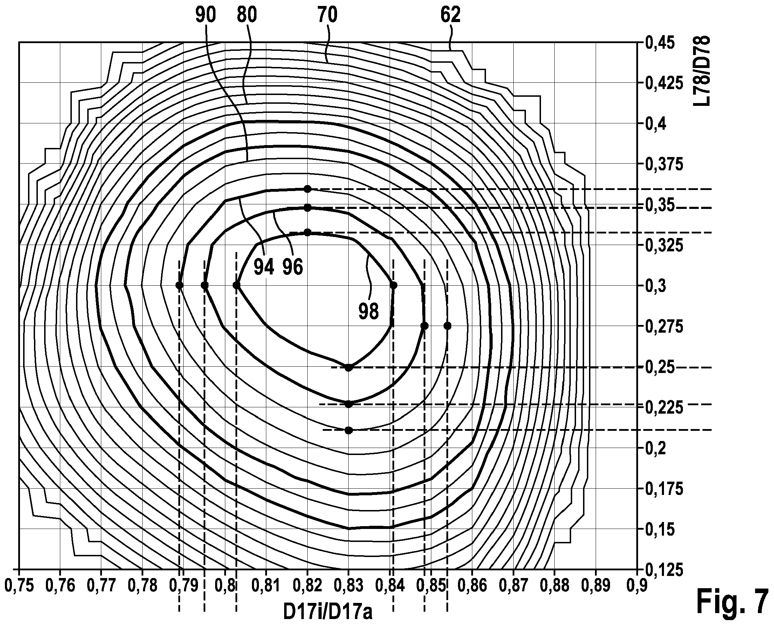

Die Figur 7 zeigt ein Diagramm, in dem auf der x-Achse das rechnerische, für verschiedene Varianten von D17i und D17a angegebene Verhältnis an (D17i/D17a). Der Polkern 78 hat einen Durchmesser D78 und eine drehaxiale Länge L78. Die rechts beschriftete y-Achse der Figur 7 gibt das für viele Varianten angenommene Verhältnis von L78 und D78 an. Im Rahmen der Auslegung haben sich verschiedene Verhältnisse als günstig erwiesen: Ein Verhältnis aus der drehaxialen Länge L78 des Polkerns 78 und dem Durchmesser D78 des Polkerns 78 soll zwischen 0,21 und 0,36, vorzugsweise zwischen 0,225 und 0,348 liegen und besonders bevorzugt zwischen 0,25 und 0,33. Das Verhältnis aus dem Innendurchmesser D17i des Ständereisens 17 und dem Außendurchmesser D17a des Ständereisens 17 soll größer als 0,788 und kleiner als 0,854, vorzugsweise größer als 0,795 und kleiner als 0,848 und besonders bevorzugt zwischen 0,802 und 0,841 sein, s. a. Figur 7, welche ohne Berücksichtigung von Permanentmagneten simuliert wurde.

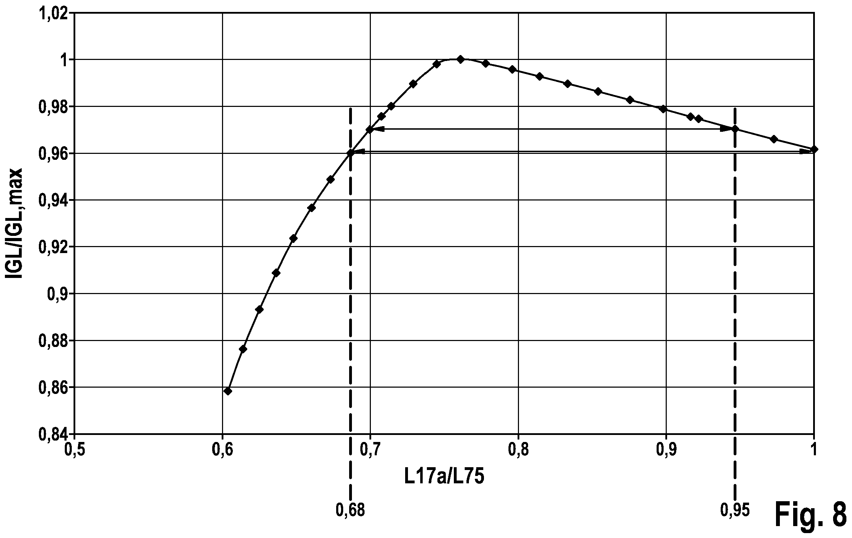

Es ist des Weiteren vorgesehen, dass der elektromagnetische Pfad 75 zwischen zwei von einander abgewandten Seiten 69, 90 der Polplatinen 22, 23 die drehaxiale Länge L75 hat, wobei das Verhältnis aus der axialen Länge L17a des Ständereisens 17 und der drehaxialen Länge L75 des elektromagnetischen Pfads 75 des Rotors 20 zwischen 0,68 und 1,0, vorzugsweise zwischen 0,70 und 0,95 ist, Figur 8. Diese Figur wurde ohne Berücksichtigung von Permanentmagneten simuliert. Dort ist das Verhältnis aus einem Abgabestrom IGL und einem maximalen Abgabestrom IGL,max bei 1800 1/min über dem Verhältnis der Länge L17a des Ständereisens 17 und der drehaxialen Länge L75 des elektromagnetischen Pfads 75 aufgetragen.

In einer Variante ist vorgesehen, dass ein Verhältnis aus dem Durchmesser D17i und der drehaxialen Länge L78 des Polkerns 78 größer als 5,0 ist.

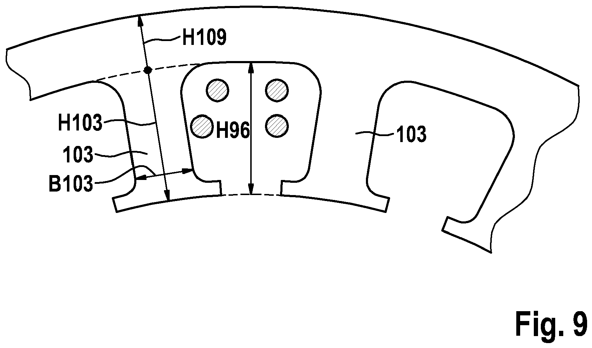

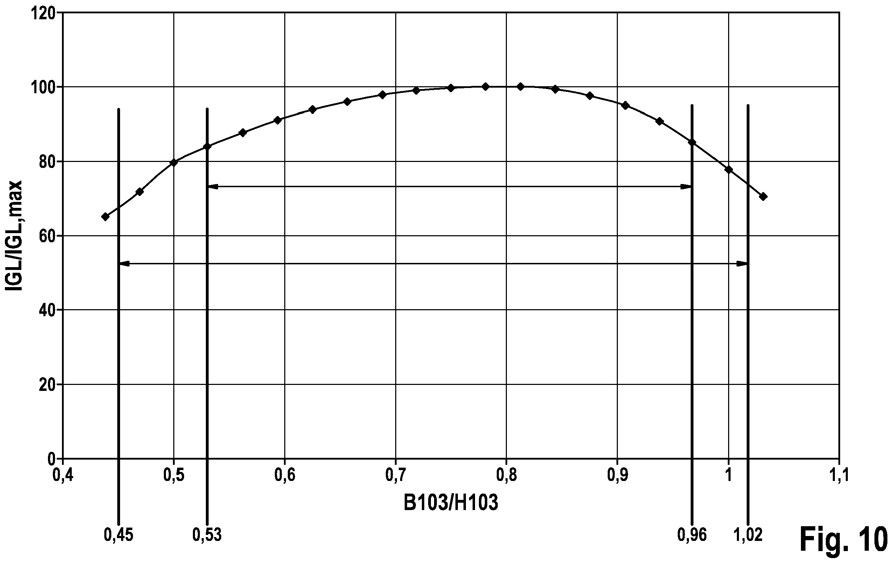

In Figur 9 ist das Ständereisen 17 in einer weiteren vergrößerten Stirnansicht gezeigt. Das Ständereisen 17 hält - wie bereits erwähnt - die Ständerwicklung 18, die in nach radial innen geöffneten Nuten 96 aufgenommen ist. Eine jede Nut 96 ist in beide Umfangsrichtungen durch je einen Zahn 103 begrenzt, wobei die Zähne 103 in Umfangsrichtung eine minimale Zahnbreite B103 und in radialer Richtung eine Zahnhöhe H103 haben. Für das Verhältnis aus der Zahnhöhe H103 und einer minimalen Zahnbreite B103 soll ein Bereich von 0,45 bis 1,02 gelten. Vorzugsweise soll für das Verhältnis aus der Zahnhöhe H103 und einer minimalen Zahnbreite B103 ein Bereich von 0,53 bis 0,96 gelten, Figur 10. Diese Figur wurde ohne Berücksichtigung von Permanentmagneten simuliert.

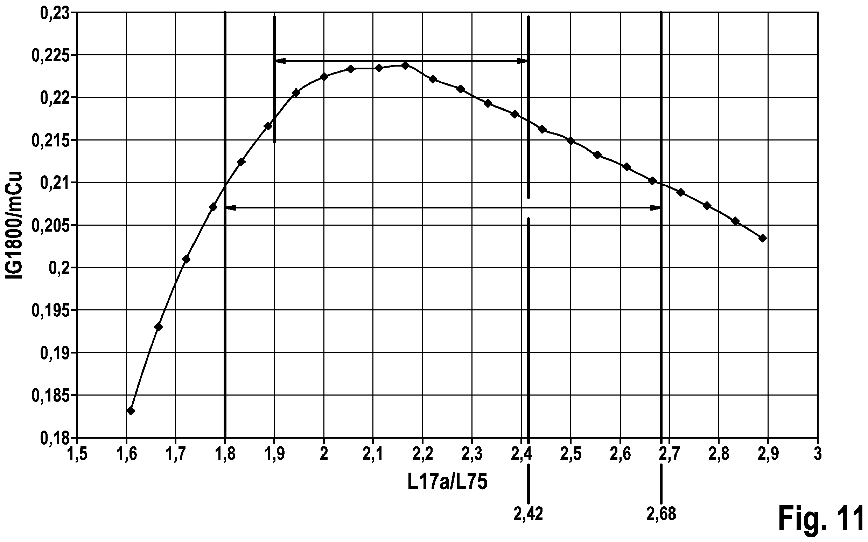

Im Zusammenhang mit dieser zuletzt erwähnten Gestaltung des Nutschnitts soll des Weiteren gelten, dass ein Verhältnis aus der axialen Länge L17a des Ständereisens 17 und der drehaxialen Länge L78 des Polkerns 78 größer als 1,8 und kleiner als 2,68, vorzugsweise größer als 1,9 und kleiner als 2,42 ist, Figur 11. Diese Figur wurde ohne Berücksichtigung von Permanentmagneten simuliert.

Der Polkern 78 kann auf verschiedene Weise definiert sein: Die in Figur 1 gezeigte Variante ist ein ringzylindrischer Polkern 78, der auf die Welle 27 aufgeschoben ist und von den Polplatinen 22, 23 getrennt ist. Eine andere bekannte Bauweise sieht einen Polkern 78 vor, der aus zwei entsprechenden Ansätzen ausgeführt ist, von denen je einer an den Polplatinen 22, 23 einstückig angeformt ist. Durch Aufschieben auf die Welle 27, wobei die beiden Ansätze einander zugewandt sind, wird ein gleichwertiger Polkern 78 erzeugt. Die Polkernlänge L78 ist hier die Summe der drehaxialen Längen der Ansätze

Es ist im Übrigen besonders bevorzugt, dass die Anzahl der Drahtquerschnitte 120 je Nut genau vier ist.

In Bezug zur permanentmagnetischen Einrichtung 88 wird angemerkt, dass die Zwischenräume 21 nach Möglichkeit vollständig mit einem oder mehreren Permanentmagneten als Teil der permanentmagnetischen Einrichtung 88 besetzt bzw. ausgefüllt sein sollen. Der oder die Permanentmagnete sollen in drehaxialer Richtung mittig zwischen Spitzen 123 und 124 der Klauenpole 24 und 25 angeordnet sein. Darüber hinaus ist vorgesehen, dass die beispielsweise in Figur 1 sichtbaren Seitenflächen 127 und 128 - vorzugsweise von den Spitzen 123 und 124 bis zu den Klauenpolwurzeln 130 und 131 der Klauenpole 24 und 25 für die Aufnahme eines oder mehrerer Permanentmagnete entweder spanlos oder spanend, insbesondere in Längsrichtung 86 des Zwischenraums 21 durchgehend, bearbeitet sind. Zur Aufnahme eines oder mehrerer Permanentmagnete ist als mechanisches Zwischenstück zwischen einem Permanentmagneten und einem Klauenpol 24 und 25 ein Halteelement vorgesehen, dass am Klauenpol 24 und/oder 25 befestigt ist und selbst jeweils zur Halterung eines Permanentmagneten dient. Das Halteelement kann in Nuten einzeln einstückig zwischen zwei Klauenpolen 24 und/oder 25 angeordnet sein oder ein Sammelhalter sein, der mehrere Permanentmagnete in unterschiedlichen Zwischenräumen 21 hält. Als Sammelhalter kann dieser ringförmig oder mäanderförmig in radialer und/oder axialer Richtung geformt sein. Die Permanentmagnete selbst können weniger - beispielsweise nur die Hälfte und hierbei z. B. nur in jedem zweiten Zwischenraum 21 - aber auch doppelt so viele wie die Anzahl der Klauenpole 24 und 25 sein. Die Permanentmagnete können aus Ferriten oder aus seltenen Erden hergestellt sein.

## Patentansprüche

1. Elektrische Maschine (10), mit einem Stator (16), der ein Ständereisen (17) aufweist, welches eine im Wesentlichen zylindrische Öffnung (60) mit einer zentralen Achse (63) hat und die Öffnung (60) einen Rotor (20) aufnimmt, wobei das Ständereisen (17) eine axiale Länge (L17a) hat, und das Ständereisen (17) eine Ständerwicklung (18) hält, mit dem Rotor (20), der eine Drehachse (66) besitzt, wobei der Rotor (20) eine axiale Stirnseite (69) hat, an der ein Lüfter (30) mit Lüfterschaufeln (72) angeordnet ist, der drehfest mit dem Rotor (20) verbunden ist, wobei der Rotor (20) einen elektromagnetisch erregbaren Pfad (75) aufweist, der einen Polkern (78) hat, an den sich an beide drehaxialen Enden (80, 82) je eine Polplatine (22, 23) anschließt, wobei von der einen Polplatine (22) Klauenpole (24) ausgehen, die eine Nordpolarität haben und von der anderen Polplatine (23) Klauenpole (25) ausgehen, die eine Südpolarität haben, wobei sich am Umfang des Rotors (20) die Klauenpole (24) und (25) nach Nordpolarität und Südpolarität abwechseln, und der Rotor (20) einen eine Längsrichtung (86) aufweisenden Zwischenraum (21) zwischen zwei benachbarten gegenpoligen Klauenpolen (24, 25) hat, wobei in dem einen Zwischenraum (21) zwischen den zwei Klauenpolen (24, 25) eine permanentmagnetische Einrichtung (88) einsitzt, wobei die permanentmagnetische Einrichtung (88) eine Länge (L88) in Längsrichtung (86) des Zwischenraums (21) hat, mit einem radial innerhalb der Klauenpole (24, 25) angeordneten Polkern (78), der eine drehaxiale Länge (L78) hat, **dadurch gekennzeichnet, dass** ein Verhältnis aus der Länge (L88) der permanentmagnetischen Einrichtung (88) und der drehaxialen Länge (L78) des Polkerns (78) größer als 1,3 ist.

2. Elektrische Maschine nach Anspruch 1, **dadurch gekennzeichnet, dass** ein Verhältnis aus dem Innendurchmesser (D17i) des Ständereisens (17) und dem Außendurchmesser (D17a) des Ständereisens (17) größer als 0,788 und kleiner als 0,854 ist.

3. Elektrische Maschine nach Anspruch 1 oder 2, **dadurch gekennzeichnet, dass** das Verhältnis aus der Länge (L88) der permanentmagnetischen Einrichtung (88) und der drehaxialen Länge (L78) des Polkerns (78) größer als 1,6 ist.

4. Elektrische Maschine nach einem der vorstehenden Ansprüche , **dadurch gekennzeichnet, dass** das Verhältnis aus dem Innendurchmesser (D17i) des Ständereisens (17) und dem Außendurchmesser (D17a) des Ständereisens (17) größer als 0,795 und kleiner als 0,848 ist, vorzugsweise größer als 0,802 und kleiner als 0,841.

5. Elektrische Maschine nach einem der vorstehenden Ansprüche, **dadurch gekennzeichnet, dass** der elektromagnetische Pfad (75) zwischen zwei von einander abgewandten Seiten (69, 90) der Polplatinen (22, 23) eine drehaxiale Länge (L75) hat, wobei das Verhältnis aus der axialen Länge (L17a) des Ständereisens (17) und der drehaxialen Länge (L75) des elektromagnetischen Pfads (75) des Rotors (20) zwischen 0,7 und 1,0 ist.

6. Elektrische Maschine nach einem der vorstehenden Ansprüche, **dadurch gekennzeichnet, dass** die Ständerwicklung (18) einen Wickelkopf (45) hat, der eine Drahtverbindung (93) aufweist, die über eine drehaxiale Länge (L93) vom Ständereisen (17) weg und wieder zu diesem hin geführt ist und dabei der Lüfter (30) radial innerhalb angeordnet ist und der vom Lüfter (30) drehaxial überdeckte Anteil der Länge (L93) der Drahtverbindung (93) größer als 0,5 ist.

7. Elektrische Maschine nach Anspruch 6, **dadurch gekennzeichnet, dass** der vom Lüfter (30) drehaxial überdeckte Anteil der Länge (L93) der Drahtverbindung größer als 0,7 ist.

8. Elektrische Maschine nach einem der vorstehenden Ansprüche, **dadurch gekennzeichnet, dass** die permanentmagnetische Einrichtung (88) einer Kompensation eines Streuflusses zwischen einem Klauenpol (24) mit Nordpolarität und einem Klauenpol (25) mit Südpolarität dient.

9. Elektrische Maschine nach einem der vorstehenden Ansprüche, **dadurch gekennzeichnet, dass** die im Wesentlichen zylindrische Öffnung (60) des Ständereisens (17) einen Durchmesser (D17i) aufweist, wobei ein Verhältnis aus dem Durchmesser (D17i) und der drehaxialen Länge (L78) des Polkerns (78) größer als 5,0 ist.

10. Elektrische Maschine nach einem der vorstehenden Ansprüche, **dadurch gekennzeichnet, dass** die Ständerwicklung (18) in nach radial innen geöffneten Nuten (96) des Ständereisens (17) eingesetzt ist, wobei die Nuten (17) jeweils eine elektromagnetisch wirksame Fläche (100) haben, in der sich jeweils eine elektromagnetisch wirksame Wicklungsanordnung (117) der Ständerwicklung (18) befindet, wobei die Wicklungsanordnung (117) mindestens einen Drahtquerschnitt (120) mit einer elektrisch wirksamen Drahtquerschnittsfläche (A120) aufweist und wobei ein Verhältnis aus der mindestens einen Drahtquerschnittsfläche (A120) und der elektromagnetisch wirksamen Fläche (100) kleiner als 0,5 ist.

## Claims

1. Electric machine (10) comprising a stator (16), which has a stator core (17), which has a substantially cylindrical opening (60) having a central axis (63), wherein the opening (60) receives a rotor (20), wherein the stator core (17) has an axial length (L17a), and the stator core (17) holds a stator winding (18), comprising the rotor (20), which has an axis of rotation (66), wherein the rotor (20) has an axial end side (69), on which a fan (30) with fan blades (72) is arranged, which fan is connected in rotationally fixed fashion to the rotor (20), wherein the rotor (20) has an electromagnetically excitable path (75), which has a pole core (78) adjoined by, at both rotationally axial ends (80, 82), in each case one pole plate (22, 23), wherein claw poles (24) which have a north polarity emanate from one pole plate (22) and claw poles (25) which have a south polarity emanate from the other pole plate (23), wherein the claw poles (24) and (25) alternate according to north polarity and south polarity over the circumference of the rotor (20), and the rotor (20) has an interspace (21) having a longitudinal direction (86) between two adjacent claw poles (24, 25) of opposite polarity, wherein a permanently magnetic device (88) rests in one interspace (21) between the two claw poles (24, 25), wherein the permanently magnetic device (88) has a length (L88) in the longitudinal direction (86) of the interspace (21), having a pole core (78) which is arranged radially within the claw poles (24, 25) and has a rotationally axial length (L78), **characterized in that** a ratio of the length (L88) of the permanently magnetic device (88) to the rotationally axial length (L78) of the pole core (78) is greater than 1.3.

2. Electric machine according to Claim 1, **characterized in that** a ratio of the inner diameter (D17i) of the stator core (17) to the outer diameter (D17a) of the stator core (17) is greater than 0.788 and less than 0.854.

3. Electric machine according to Claim 1 or 2, **characterized in that** the ratio of the length (L88) of the permanently magnetic device (88) to the rotationally axial length (L78) of the pole core (78) is greater than 1.6.

4. Electric machine according to one of the preceding claims, **characterized in that** the ratio of the inner diameter (D17i) of the stator core (17) to the outer diameter (D17a) of the stator core (17) is greater than 0.795 and less than 0.848, preferably greater than 0.802 and less than 0.841.

5. Electric machine according to one of the preceding claims, **characterized in that** the electromagnetic path (75) has a rotationally axial length (L75) between two mutually remote sides (69, 90) of the pole plates (22, 23), wherein the ratio of the axial length (L17a) of the stator core (17) to the rotationally axial length (L75) of the electromagnetic path (75) of the rotor (20) is between 0.7 and 1.0.

6. Electric machine according to one of the preceding claims, **characterized in that** the stator winding (18) has an end winding (45) which has a wired connection (93), which is passed over a rotationally axial length (L93) away from the stator core (17) and back towards said stator core, and in this case the fan (30) is arranged radially within and that proportion of the length (L93) of the wired connection (93) which is covered rotationally axially by the fan (30) is greater than 0.5.

7. Electric machine according to Claim 6, **characterized in that** the proportion of the length (L93) of the wired connection which is covered rotationally axially by the fan (30) is greater than 0.7.

8. The electic machine as claimed in one of the preceding claims, **characterized in that** the permanently magnetic device (88) serves to compensate for a leakage flux between a claw pole (24) with north polarity and a claw pole (25) with south polarity.

9. Electric machine according to one of the preceding claims, **characterized in that** the substantially cylindrical opening (60) in the stator core (17) has a diameter (D17i), wherein a ratio of the diameter (D17i) to the rotationally axial length (L78) of the pole core (78) is greater than 5.0.

10. Electric machine according to one of the preceding claims, **characterized in that** the stator winding (18) is inserted into slots (96) in the stator core (17) which are open radially inwards, wherein the slots (17) each have an electromagnetically effective area (100) in which in each case one electromagnetically effective winding arrangement (117) of the stator winding (18) is located, wherein the winding arrangement (117) has at least one wire cross section (120) with an electrically active wire cross-sectional area (A120), and wherein a ratio of the at least one wire cross-sectional area (A120) to the electromagnetically effective area (100) is less than 0.5.

## Revendications

1. Machine électrique (10), comportant un stator (16) qui comprend un fer de stator (17) ayant une ouverture (60) sensiblement cylindrique présentant un axe central (63) et l'ouverture (60) recevant un rotor (20), dans lequel le fer de stator (17) présente une longueur axiale (L17a), et le fer de stator (17) supporte un enroulement de stator (18), avec le rotor (20), qui possède un axe de rotation (66), dans lequel le rotor (20) présente une face avant axiale (69) sur laquelle est disposé un ventilateur (30) comportant des ailettes (72), qui est relié de manière solidaire en rotation au rotor (20), dans lequel le rotor (20) comprend un trajet (75) pouvant être excité de manière électromagnétique, qui présente un noyau polaire (78) au niveau duquel une plaque polaire respective (22, 23) se raccorde aux deux extrémités axiales de rotation (80, 82), dans lequel des pôles à griffes (24) partent de ladite plaque polaire (22), lesquels pôles à griffes présentent une polarité orientée vers le nord et des pôles à griffes (25) partent de l'autre plaque polaire (23), lesquels pôles à griffes présentent une polarité orientée vers le sud, dans lequel les pôles à griffes (24) et (25) sont disposés en alternance sur la périphérie du rotor (20) selon une polarité orientée vers le nord et une polarité orientée vers le sud, et le rotor (20) comporte un espace intermédiaire (21) ayant une direction longitudinale (86) entre deux pôles à griffes (24, 25) voisins de même orientation polaire, dans lequel un dispositif à aimant permanent (88) est inséré dans ledit espace intermédiaire (21) entre les deux pôles à griffes (24, 25), dans lequel le dispositif à aimant permanent (88) présente une longueur (L88) dans la direction longitudinale (86) de l'espace intermédiaire (21), avec un noyau polaire (78) disposé radialement à l'intérieur des pôles à griffes (24, 25), lequel noyau polaire présente une longueur axiale de rotation (L78), **caractérisé en ce qu'**un rapport de la longueur (L88) du dispositif (88) à aimant permanent à la longueur axiale de rotation (L78) du noyau polaire (78) est supérieur à 1,3.

2. Machine électrique selon la revendication 1, **caractérisée en ce qu'**un rapport du diamètre intérieur (D17i) du fer de stator (17) au diamètre extérieur (D17a) du fer de stator (17) est supérieur à 0,788 et inférieur à 0,854.

3. Machine électrique selon la revendication 1 ou 2, **caractérisée en ce que** le rapport de la longueur (L88) du dispositif (88) à aimant permanent à la longueur axiale de rotation (L78) du noyau polaire (78) est supérieur à 1,6.

4. Machine électrique selon l'une quelconque des revendications précédentes, **caractérisée en ce que** le rapport du diamètre intérieur (D17i) du fer de stator (17) au diamètre extérieur (D17a) du fer de stator (17) est supérieur à 0,795 et inférieur à 0,848, et de préférence, est supérieur à 0,802 et inférieur à 0,841.

5. Machine électrique selon l'une quelconque des revendications précédentes, **caractérisée en ce que** le trajet électromagnétique (75) entre deux côtés (69, 90) mutuellement opposés des plaques polaires (22, 23) présente une longueur axiale de rotation (L75), dans lequel le rapport de la longueur axiale (L17a) du fer de stator (17) à la longueur axiale de rotation (L75) du trajet électromagnétique (75) du rotor (20) est compris entre 0,7 et 1,0.

6. Machine électrique selon l'une quelconque des revendications précédentes, **caractérisée en ce que** l'enroulement de stator (18) présente une tête d'enroulement (45) qui comprend une liaison par fil (93) s'éloignant du fer de stator (17) sur une longueur axiale de rotation (L93) et revenant vers celui-ci et par conséquent, le ventilateur (13) est disposé radialement à l'intérieur et la fraction de la longueur (L93) de la liaison par fil (93) recouverte suivant l'axe de rotation par le ventilateur (30) est supérieure à 0,5.

7. Machine électrique selon la revendication 6, **caractérisée en ce que** la fraction de la longueur (L93) de la liaison par fil, recouverte suivant l'axe de rotation par le ventilateur (30), est supérieure à 0,7.

8. Machine électrique selon l'une quelconque des revendications précédentes, **caractérisée en ce que** le dispositif à aimant permanent (88) est utilisé pour effectuer une compensation d'un flux de fuite entre un pôle à griffes (24) ayant une polarité orientée vers le nord et un pôle à griffes (25) ayant une polarité orientée vers le sud.

9. Machine électrique selon l'une quelconque des revendications précédentes, **caractérisée en ce que** l'ouverture (60) sensiblement cylindrique du fer de stator (17) présente un diamètre (D17i), dans lequel un rapport du diamètre (D17i) à la longueur axiale de rotation (L78) du noyau polaire (78) est supérieur à 5,0.

10. Machine électrique selon l'une quelconque des revendications précédentes, **caractérisée en ce que** l'enroulement de stator (18) est inséré dans des rainures (96) s'ouvrant radialement vers l'intérieur du fer de stator (17), dans lequel les rainures (17) présentent respectivement une surface (100) électromagnétiquement active, dans laquelle se trouve un système d'enroulements (117) électromagnétiquement actif de l'enroulement de stator (18), dans lequel le système d'enroulements (17) comprend au moins une section transversale de fil (120) ayant une superficie en section transversale du fil (A120) électriquement active et dans lequel un rapport de l'au moins une superficie en section transversale du fil (A120) à la surface électro-magnétiquement active (100) est inférieur à 0,5.
